(19) Europäisches Patentamt
European Patent Office
Office européen des brevets

(11) Publication number: 0 232 965 B1

(12) EUROPEAN PATENT SPECIFICATION

(45) Date of publication of patent specification: 17.10.90

(51) Int. Cl.$^5$: C 09 K 7/02 // C07C233/09, C07C233/89, C07C219/08, C07C231/00, C07C213/04, C08F220/60

(21) Application number: 87300182.0

(22) Date of filing: 09.01.87

# (54) Preparation of vicinal diol containing monomers and polymers, and subterranean use thereof.

(30) Priority: 14.01.86 US 818834
14.01.86 US 819166

(43) Date of publication of application:
19.08.87 Bulletin 87/34

(45) Publication of the grant of the patent:
17.10.90 Bulletin 90/42

(84) Designated Contracting States:
AT DE ES FR GB IT NL

(56) References cited:
DE-A-2 942 330
GB-A-2 142 035
US-A-4 218 554

(73) Proprietor: HALLIBURTON COMPANY
P.O. Drawer 1431
Duncan Oklahoma 73536 (US)

(72) Inventor: Hanlon, David James
712 North "C",
Duncan Oklahoma 73533 (US)
Inventor: Conway, Michael Wayne
1501 Cedar
Duncan Oklahoma 73533 (US)
Inventor: Holtmyer, Marlin Dean
1219 North 12th
Duncan Oklahoma 73533 (US)
Inventor: Hunt, Charles Vernon
1510 Somerset Place
Duncan Oklahoma 73533 (US)

(74) Representative: Wain, Christopher Paul et al
A.A. THORNTON & CO. Northumberland House
303-306 High Holborn
London WC1V 7LE (GB)

EP 0 232 965 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates generally to vicinal diol-containing monomers and polymers, and to high viscosity, high temperature stable aqueous gels formed with the polymers, which gels are particularly useful in treating subterranean formations.

Gelled aqueous fluids are used in a variety of industrial applications to bring about desired results. For example, in the oil industry, gelled aqueous fluids are commonly utilized in carrying out completion, various production stimulation, enhanced production, conformance control and other treatments in subterranean formations containing hydrocarbons. Such gelled aqueous fluids have included both naturally occurring and synthetic water-soluble polymer gelling agents as well as agents which cause the polymers to crosslink. The term "aqueous fluid" is used herein to mean any fluid containing some water. The fluid can also contain other components such as alcohols, acids, salts and other miscible or partially miscible substances, gasifiable components such as $CO_2$ and $N_2$, and solids.

The naturally occurring polymer gelling agents utilized heretofore include solvatable polysaccharides such as galactomannan gums, glucomannan gums and cellulose derivatives. The synthetic polymer gelling agents include polyacrylate, polymethacrylate, acrylamide-acrylate copolymers, and others. The crosslinking agents utilized include compounds such as multivalent metal salts, which are capable of releasing metal ions in an aqueous fluid. Examples of the multivalent metal ions are chromium, zirconium, antimony, titanium, iron, tin, zinc and aluminum.

While the heretofore utilized gelled aqueous fluids have been effective at temperatures below about 82°C (180°F), at temperatures above about 93°C (200°F), and particularly where the aqueous fluids are brines or otherwise contain calcium ions, such gelled aqueous fluids are unstable in that they precipitate or rapidly degrade and revert to thin fluids. Since many subterranean formations requiring procedures or treatments utilizing gelled aqueous fluids exist at temperatures above about 93°C (200°F), there is a need for a method involving gelled aqueous fluids which are stable at such high temperatures. The terms "stable at high temperatures" and "high temperature stability" are used herein with respect to gelled aqueous fluids to mean that the gelled aqueous fluids retain substantial viscosity for times greater than about 6 to 8 hours at temperatures in the range of from about 82°C (180°F) to in excess of 149°C (300°F).

We have now found that certain water-soluble cross-linkable polymers are stable at high temperatures and are particularly useful for treating high temperature subterranean formations.

According to the present invention there is provided a method of treating a high temperature subterranean formation, which comprises contacting said formation with a highly viscous gel formed of an aqueous fluid, a crosslinking agent and a water-soluble polymer containing crosslinkable vicinal diol groups and derived by reacting in an aqueous solution a water-soluble vinyl monomer or polymer thereof, which monomer is a tertiary amine having the formula:

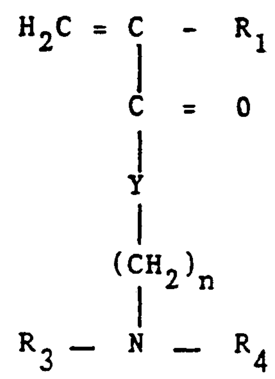

or

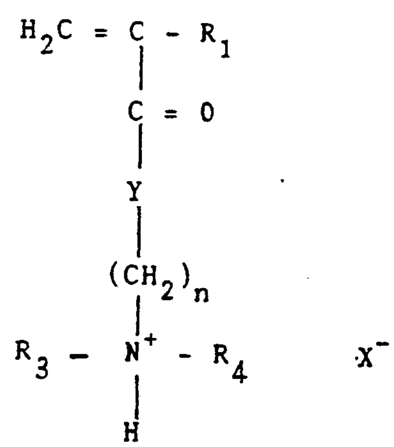

wherein $R_1$ is hydrogen or methyl; Y is oxygen or NH; $R_3$ and $R_4$ are independently methyl or ethyl; n is 2 or 3; and $X^-$ is a halogen, $\frac{1}{2}(SO_4)^=$, $CH_3SO_4^-$, $C_2H_3SO_4^-$ or $CH_3COO^-$; with at least one reactive vicinal diol-forming or -containing compound selected from glycidol and the 3-halo-1,2-propanediols.

The monomers used in the present invention to make the water-soluble polymers have the formula:

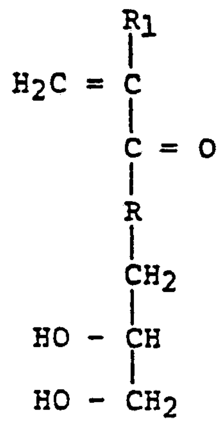

wherein:

R is 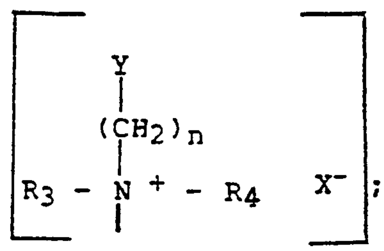;

$R_1$ is hydrogen or methyl;
$R_3$ and $R_4$ are independently methyl or ethyl;
Y is oxygen or NH;
$X^-$ is a halogen, $\frac{1}{2}(SO_4)=$, $CH_3SO_4^-$, $C_2H_3SO_4^-$ or $CH_3COO^-$; and
n is 2 or 3.

Some of the polymers used in the present invention are known from US—A—4218554.

Particularly suitable starting water soluble vinyl monomers containing tertiary amine groups are dimethylaminopropyl methacrylamide (hereinafter referred to as DMAPMA), dimethylaminoethyl methacrylamide (hereinafter referred to as DMAEMA), dimethylaminopropyl acrylate (hereinafter referred to as DMAPA), dimethylaminoethyl methacrylate (hereinafter referred to as DMAEM), dimethylaminoethyl methacrylate (hereinafter referred to as DEAEM) and diethylaminoethyl acrylate (hereinafter referred to as DEAEA). Of these, DMAPMA is the most preferred.

The reactive vicinal diol-forming or -containing compounds which can be utilized are glycidol and the 3-halo-1,2-propanediols such as 3-chloro-1,2-propanediol (α-chlorohydrin) and 3-bromo-1,2-propanediol.

In one technique glycidol, an epoxide, is reacted with the starting vinyl monomer. The nucleophilic amine cleaves the epoxide ring and a proton is consumed in the reaction. Therefore, the addition of a neutralizing acid or other proton source is required as the reaction proceeds. More specifically, the starting vinyl monomer and glycidol reactants are diluted with equal parts of water to make 50% active solutions. The glycidol solution and starting vinyl monomer solution are slowly combined in equal molar amounts while enough of the chosen proton source, e.g. a 50% by weight acid solution to maintain the pH of the reaction mixture in the range of from about 7.5 to about 12, is simultaneously added. The temperature of the reaction mixture is preferably controlled in the range of from about 10° to 20°C while the glycidol and proton source are added to the vinyl monomer solution and then raised to about 40°C.

When the starting vinyl monomer is DMAPMA and the proton source is sulfuric acid, the vicinal diol containing monomer formed by the procedure described above is methacrylamidopropyldimethyl-2, 3-dihydroxypropylammonium sulfate (hereinafter referred to as MAPDMDHPAS). The procedure and reaction are represented schematically as follows:

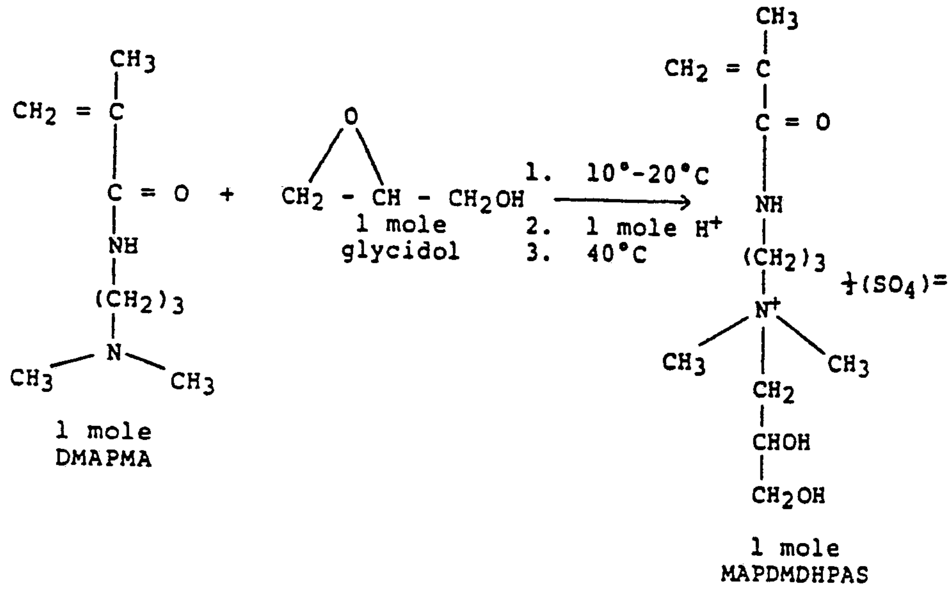


A similar synthesis procedure is to convert the starting amine group containing monomer to the amine salt before reacting it with glycidol. For example, one mole of the starting monomer in a 50% aqueous solution can be combined with one mole of proton source prior to combining glycidol therewith. Glycidol is then combined with the salt formed at a temperature of about 10 to 20°C followed by raising the temperature to about 40°C while the reaction goes to completion. When the starting monomer is DMAPMA and the proton source is sulfuric acid, MAPDMDHPAS is formed.

Another synthesis procedure which can be utilized to form the quaternary ammonium type of vicinal diol containing monomer is to react the starting vinyl monomer with 3-halo-1,2-propanediol. For example, a 50% aqueous solution of the starting monomer can be combined with an equal molar quantity of 3-halo-1,2-propanediol at a temperature of about 40°C to form the vicinal diol containing monomer.

When the starting monomer is DMAPMA and the vicinal diol containing compound ios 3-chloro-1,2-propanediol (α-chlorohydrin), the vicinal diol containing monomer formed is methacrylamidopropyldimethyl-2,3-dihydroxypropylammonium chloride (hereinafter referred to as MAPDMDHPAC). This procedure and reaction are represented schematically as follows:

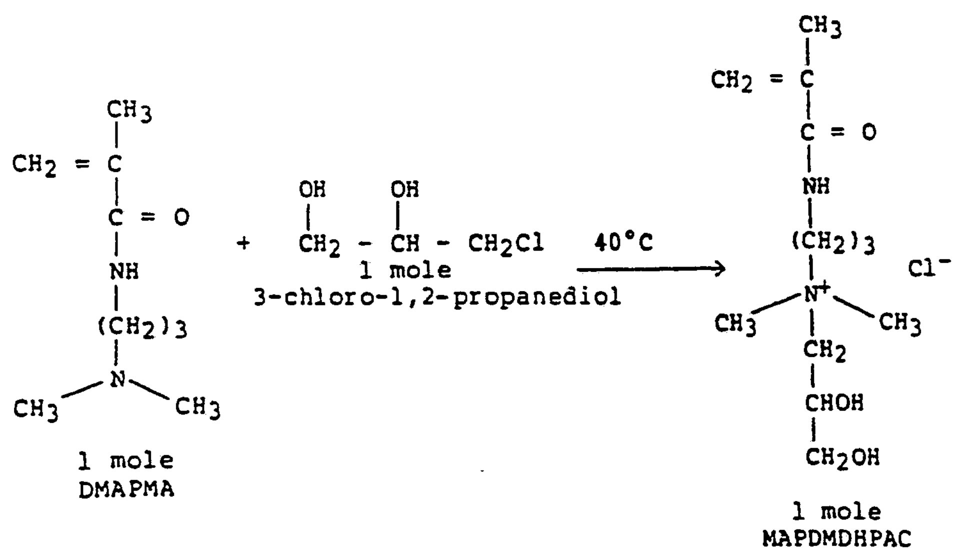


In another aspect of the present invention, water soluble polymers containing crosslinkable vicinal diol groups are provided. Such polymers can be formed from the vicinal diol containing monomers of this invention described above. That is, a vicinal diol containing vinyl monomer is polymerized with one or more other monomers to form a high molecular weight (above about 100,000) polymer containing crosslinkable vicinal diol groups. The polymerization reaction can be carried out utilizing known water-in-oil emulsion techniques or aqueous solution techniques.

Examples of monomers which can be utilized with the vicinal diol containing monomers in the polymerization reaction to form copolymers or terpolymers are DMAPMA, methacrylamidopropyltrimethylammonium chloride (hereinafter referred to as MAPTAC), N,N-dimethylacrylamide (hereinafter referred to as NNDMA), acrylamide, methacrylamide, 2-acrylamido-2-methylpropanesulfonic acid (hereinafter referred to as AMPS), sodium styrene sulfonate, N-vinyl-2-pyrrolidone and acrylic acid. Preferably, the vicinal diol containing vinyl monomer MAPDMDHPAS is polymerized with NNDMA to form a copolymer with a mole ratio of 9 moles of NNDMA to 1 mole of MAPDMDHPAS. However, other copolymers and terpolymers of other mole ratios using a variety of other monomers can be formed and utilized in accordance with this invention as illustrated in the examples which follow.

In an alternate procedure for forming the vicinal diol containing polymers of this invention, a polymer starting material can be reacted with glycidol to add the vicinal diol group to the polymer. For example, a copolymer of DMAEM and acrylamide can be reacted with glycidol at a pH of about 10 to form a vicinal diol containing polymer equivalent to a polymer containing equivalent mole amounts of acrylamide, DMAEM and the quaternization product of DMAEM and glycidol formed from monomer starting materials.

As mentioned above, the polymers of this invention containing vicinal diol groups are water soluble and hydrate in aqueous fluids. Upon being crosslinked by way of the diol groups, a high viscosity, high temperature stable, crosslinked aqueous fluid results.

In forming a high viscosity gelled aqueous fluid of this invention which is stable at high temperatures, a polymer containing crosslinkable vicinol diol groups is dissolved in an aqueous fluid. Generally, the polymer is dissolved in the aqueous fluid in an amount in the range of from about 0.48 to about 96 kg/$m^3$ (0.004 to about 0.8 pounds of active polymer per gallon) of solution, preferably in the range of from about 2.4 to about 9.6 kg/$m^3$ (0.02 to about 0.08 pounds per gallon) of solution. A crosslinking agent is combined with the aqueous fluid-polymer solution to thereby crosslink the vicinal diol groups of the polymer whereby a high viscosity, high temperature stable, gelled aqueous fluid is formed. The cross-linking agent is combined with the aqueous fluid-polymer solution in an amount in the range of from about 0.12 kg/$m^3$ (0.001 pounds/gallon) of solution to about 24 kg/$m^3$ (0.2 pounds/gallon) of solution.

The crosslinking agents that can be utilized in the present invention can generally be described as water soluble salts and complexes of multivalent cations which are capable of forming a crosslinked gel with vicinal diol groups of the polymer. Examples of the multivalent metal cations are zirconium, antimony, titanium, iron, tin, chromium and aluminum. In addition to the metal cations, boron can be utilized as a crosslinking agent. Particularly preferred such crosslinking agents are zirconium salts, such as zirconium lactate, zirconium acetate, and zirconium oxychloride; chrome citrate; and titanium triethanolamine. The most preferred is a zirconium lactate cross-linking composition.

A particularly suitable zirconium lactate crosslinking composition can be prepared by adding about 2 moles of lactic acid to a quantity of water sufficient to allow mixing of ingredients, and then adjusting the pH of the resulting acid solution to about 7 with ammonium hydroxide. About one mole of zirconium metal ion having a valence of +4, preferably as zirconium oxychloride, is then added to the solution to form the crosslinking composition.

Another similar suitable zirconium lactate crosslinking composition includes 2 moles of triethanolamine in addition to the lactic acid and zirconium oxychloride added at a pH of about 7.

The high viscosity, high temperature stable, gelled aqueous fluids formed in accordance with the present invention utilizing polymers containing vicinal diol groups are particularly suitable for carrying out completion, stimulation, enhanced production and other treatments in high temperature subterranean formations, e.g., formations existing at temperatures above about 82°C (180°F). Examples of such treatments where high viscosity gelled aqueous fluids are utilized are treatments for consolidating loose sands in formations, acidizing formations, fracturing formations, and enhancing production from formations. In accordance with the present invention, such treatments and others are carried out in high temperature subterranean formations by contacting the formations with highly viscous aqueous gels comprised of aqueous fluids, water soluble polymers containing vicinal diol groups of the present invention and crosslinking agents.

To further illustrate the present invention and facilitate a clear understanding thereof, the following examples are given.

### Example 1

A water soluble vicinal diol containing vinyl monomer (MAPDMDHPAS) is prepared from DMAPMA and glycidol starting materials as follows.

170.26 g (1 mole) of dimethylaminopropyl methacrylamide (DMAPMA) are placed in a glass vessel containing a magnetic stirrer and mixed with 294.91 g of deionized water. Two addition funnels are suspended above the vessel; one containing 75.6 g of glycidol and the other containing 49.05 g of concentrated $H_2SO_4$. The pH and temperature of the reaction mixture are monitored continuously while the $H_2SO_4$ is added dropwise over a period of about 30 minutes. Prior to the $H_2SO_4$ addition, the solution is cooled to 19°C and the solution has a pH of 11.3. After the $H_2SO_4$ addition, the solution is cooled to 15°C and has a pH of 7.5. The glycidol is next added dropwise and the vessel is warmed to about 21°C using a hotplate. The glycidol addition time is 1 hour and 35 minutes and the final pH is 7.41. The reaction mixture

is heated to and maintained at 40°C for 40 hours. The final pH is 9.5. Analysis of the reaction indicates a trace of DMAPMA along with MAPDMDHPAS monomer.

The structure of the synthesized MAPDMDHPAS monomer is indicated to be as follows:

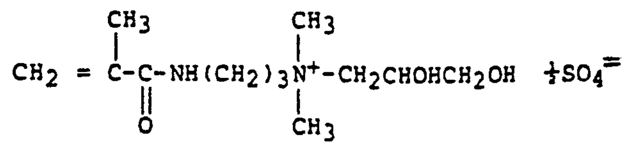

Example 2

Homopolymers, copolymers and terpolymers are prepared using the vicinal diol containing monomer (MAPDMDHPAS) prepared as described in Example 1 and other monomers. A water-in-oil emulsion technique is used which is illustrated by the following procedure wherein a copolymer of acrylamide (90 mole %) and MAPDMDHPAS (10 mole %) is prepared.

The following ingredients are mixed with stirring until homogeneous to form an aqueous phase:

| | |
|---|---|
| 50% aqueous MAPDMDHPAS | 58.67 g |
| 46% aqueous acrylamide | 139.23 g |
| deionized water | 20.0 g |
| ethylenediamine tetracetic acid, disodium salt, dihydrate ($Na_2$ EDTA) | .05 g |
| sodium chloride | 6.0 g |

The pH of the aqueous phase is adjusted to 7.42 with .15 ml 50% NaOH.

The following ingredients are mixed to form an oil phase.

| | |
|---|---|
| a mixture of isoparaffinic hydrocarbons (ISOPAR M) | 81 g |
| sorbitan monooleate | 6 g |

The oil phase is added to a 500 ml Waring blendor jar fitted with a lid containing two openings for an $N_2$ inlet tube and an addition funnel. The oil phase and waring blendor jar are sparged with $N_2$ gas. The aqueous phase is introduced into the oil phase over a 1½ minute period while stirring at about 4000 rpm. The resulting emulsion is stirred for an additional 5 minutes at the same rate.

The emulsion is added to a presparged one-liter glass kettle fitted with a stirrer, a $N_2$ inlet tube, a $N_2$ exit tube, and a thermocouple probe with a digital readout. The water-in-oil comonomer emulsion is stirred at an rpm of from about 500 to about 1500 and sparged with $N_2$ gas while heating to 40°C in about 30 minutes, followed by the addition of 0.2 g sodium bisulfite. Stirring and sparging are continued while maintaining the temperature at about 40°C for 15 minutes, followed by the addition of 0.1 g 2,2-azobis(2,4-dimethylvaleronitrile) initiator. After about 45 minutes, a mild exotherm starts which continues for about 3 hours. The temperature is maintained for one additional hour and an additional 0.1 g of 2,2-azobis-(2,4-dimethylvaleronitrile) is added. The temperature is increased to about 60°C and held for about one hour after which the emulsion is cooled to room temperature. This emulsion is homogeneous and stable.

The inversion of the emulsion is caused by adding 3.33 g of the emulsion to a Waring blendor containing 100 g of API brine and 0.3 ml of a 50% solution of dimethylbenzyltallow ammonium chloride. "API brine" is a laboratory brine formulation comprised of 1350 g NaCl and 150 g $CaCl_2$ dissolved in 13500 g of deionized water and filtered through E—D grade 617 filter paper or equivalent. Inversion of the polymer into the brine occurs in seconds as evidenced by a large increase in viscosity.

A number of polymers are prepared utilizing the general procedure described above. The identification of the polymers and synthesis reaction conditions involved are set forth in Tables I and II below.

The polymers are identified using a code that gives the mole % of the various monomers used in their preparation. That is, three numbers are used (0.0.0) representing, in order, mole % acrylamide, mole % NNDMA, and mole % of a termonomer. These are followed by a letter which represents the termonomer or a monomer substituted for the NNDMA, where A is dimethylaminopropyl methacrylamide (DMAPMA), DS is methacrylamidopropyldimethyl-2, 3-dihydroxypropylammonium sulfate (MAPDMDHPAS), DC is methacrylamidopropyldimethyl-2,3-dihydroxypropyl ammonium chloride (MAPDMDHPAC), Q is methacrylamidopropyltrimethyl ammonium chloride (MAPTAC) and M is methacrylamide. Sometimes a fourth number is used which represents the particular polymer synthesis. The presence of a P indicates that it is an emulsion polymer. The presence of a K or the absence of P indicates a solution polymer. The number of the polymer sometimes follows the P in the polymer identification code.

TABLE I
Polymer Synthesis
Mole % of Monomer Feed

| Polymer No. | Polymer Identification | Monomer 1 | Mole % | Monomer 2 | Mole % | Monomer 3 | Mole % | Polymer Activity % |
|---|---|---|---|---|---|---|---|---|
| 1-5 | 90.0.10Q.P1-5 | AcAm | 90 | MAPTAC | 10 | ---- | ---- | 30.6 |
| 6 | 90.0.10DC.P6 | AcAm | 90 | MAPDMDHPAC | 10 | ---- | ---- | 30.6 |
| 7 | 90.0.100A.P7 | AcAm | 90 | DMAPMA | 10 | ---- | ---- | 29.9 |
| 8 | 90.0.10A.P8 | AcAm | 90 | DMAPMA·½$H_2SO_4$ | 10 | ---- | ---- | 30.6 |
| 9 | 90.0.10DS.P9 | AcAm | 90 | MAPDMDHPAS | 10 | ---- | ---- | 31.0 |
| 10 | 90.3.0.9.7DS.P10 | AcAm | 90.3 | MAPDMDHPAS | 9.7 | ---- | ---- | 31.5 |
| 11 | 100.0.0.P11 | AcAm | 100 | --- | --- | ---- | ---- | 30.7 |
| 12 | 0.0.100DS.P12 | ---- | --- | MAPDMDHPAS | 100 | ---- | ---- | 30.6 |
| 13 | 50.0.50DS.P13 | AcAm | 50 | MAPDMDHPAS | 50 | ---- | ---- | 32.8 |
| 14 | 90.0.10DS.P14 | AcAm | 90 | MAPDMDHPAS | 10 | ---- | ---- | 25.0 |
| 15 | 80.0.20DS.P15 | AcAm | 80 | MAPDMDHPAS | 20 | ---- | ---- | 30.0 |
| 16 | 80.0.20DS.P16 | AcAm | 80 | MAPDMDHPAS | 20 | ---- | ---- | 30.8 |
| 17 | 90.0.10DS.P17 | AcAm | 90 | MAPDMDHPAS | 10 | ---- | ---- | 30.0 |
| 18 | 50.40M.10DS.P18 | AcAm | 50 | MAPDMDHPAS | 10 | MAA | 40 | 30.0 |
| 19 | 90.0.10Q.P19 | AcAm | 90 | MAPTAC | 10 | ---- | ---- | 30.0 |
| 20 | 90.0.10DS.P20 | AcAm | 90 | MAPDMDHPAS | 10 | ---- | ---- | 30.0 |
| 21 | 80.10Q.10DS.P21 | AcAm | 80 | MAPDMDHPAS | 10 | MAPTAC | 10 | 30.0 |

AcAm - Acrylamide
MAPTAC - Methacrylamidopropyltrimethylammonium chloride
MAPDMDHPAC - Methacrylamidopropyldimethyldihydroxypropylammonium chloride
DMAPMA - Dimethylaminopropyl methacrylamide
MAPDMDHPAS - Methacrylamidopropyldimethyldihydroxypropylammonium sulfate
MAA - Methacrylamide

TABLE II

Polymer Synthesis Reaction Conditions

| Polymer No. | Monomers (g) | $H_2O$ (g) | NaCl (g) | $Na_2$, EDTA (g) | pH | $NaHSO_3$ (g) | Isoparaffinic Hydro-carbons (Isopar M) (g) | Sorbitan Monooleate (g) | Initiator[1] (g) | Temp. (°C) | Time Hours |
|---|---|---|---|---|---|---|---|---|---|---|---|
| 1 | 172.3 | 208.3 | --- | .1 | 4.7 | --- | 162 | 18.4 | .5 | 49-51 | 2 |
| 2 | 86.15 | 104 | --- | .05 | 4.7 | .25 | 81 | 9.2 | .25+.25 | 50-60 | 4 |
| 3 | 86.39 | 104 | --- | .1 | 4.7 | .1 | 81 | 9.2 | .25 | 50-60 | 2 |
| 4 | 86.39 | 104 | --- | .05 | 4.7 | .4 | 81 | 9.2 | .25+.1 | 50-53 | 3 |
| 5 | 86.20 | 104.15 | --- | .05 | 4.6 | .5 | 81 | 9.2 | .25+.25 | 46-62 | 4 |
| 6 | 86.20 | 104.15 | --- | .05 | 7.8 | .25 | 81 | 9.2 | .25 | 45-51 | 3 |
| 7[2] | 81.14 | 99.1 | --- | .05 | 10.1 | .5 | 81 | 9.2 | .25 | 45-90 | 4 |
| 8 | 85.95 | 103.9 | 0.2 | .05 | --- | --- | 81 | 9.2 | .25 | 45±.3 | 3 |
| 9 | 93.39 | 111.34 | 0.2 | .05 | 4.9 | --- | 81 | 9.2 | .25 | 45±.3 | 3 |
| 10 | 92.37 | 110.32 | 0.2 | .05 | 4.9 | --- | 81 | 9.2 | .20 | 45±.3 | 4 |
| 11 | 91.03 | 106.87 | 0.2 | .05 | 4.8 | --- | 81 | 9.2 | .20 | 45±.4 | 3 |
| 12[3] | 91.0 | 113.74 | 0.2 | .05 | 4.9 | .4 | 81 | 9.2 | .20 | 45±.3 | 4 |
| 13 | 91.11 | 96.14 | 0.2 | .05 | 4.9 | --- | 81 | 9.2 | .20 | 45±.2 | 3 |
| 14 | 93.39 | 111.34 | 20. | .05 | 7.8 | --- | 81 | 9.2 | .1+.1 | 40.6-43.7 | 5 |
| 15[3] | 115.53 | 169.31 | 10. | .05 | 8.9 | .35 | 81 | 9.2 | .1+.1 | 45-50 | 6 |
| 16 | 115.53 | 156.82 | 10. | .05 | 7.7 | .3 | 81 | 9.2 | .1+.1 | 40.7-42.7 | 8 |
| 17 | 93.39 | 124.47 | 6. | .05 | 7.5 | .2 | 81 | 6 | .1+.1 | 42-45 | 7 |
| 18 | 98.88 | 137.06 | 6. | .05 | 7.9 | .2 | 81 | 6 | .2+.2 | 41-49 | 6 |
| 19 | 86.20 | 107.65 | 6. | .05 | 8.3 | .2 | 81 | 6 | .1+.1 | 40-45 | 4 |
| 20 | 93.39 | 124.46 | 6. | .05 | 7.4 | .2 | 81 | 6 | .1+.1 | 37-41 | 6 |
| 21 | 108.28 | 159.26 | 6. | .05 | 7.6 | .2 | 81 | 6 | .1+.1 | 39-43 | 6 |

1 2,2' Azobis (2,4-dimethylvaleronitrile); +means 2 separate additions

2 Reaction exotherm uncontrollable

3 Reaction incomplete, little to no exotherm

The polymers described above can be prepared using a solution technique instead of the water-in-oil emulsion technique. The solution technique involves reacting the monomers with initiators and buffer in an aqueous solution in the absence of oxygen. A reaction pH in the range of from about 6 to about 9 and a reaction temperature in the range of from about 0°C to about 49°C (32°F to about 120°F) can be utilized to form the polymer solution.

Example 3

The polymer emulsions formed as described in Example 2 are inverted in API brine, hydrated, crosslinked and evaluated for stability at 121°C (250°F).

E. Emulsion Inversion and Polymer Hydration

A quantity of API brine is placed in a Waring blendor jar and mixed at low speed. An inverter such as a 50% by weight aqueous solution of dimethylbenzyltallow ammonium chloride is added in an amount of 10% by weight of emulsion to be inverted. The mixing rate is increased to about 1500 rpm and the amount of polymer emulsion used is added and mixed for one minute. The resulting viscosity is measured on a Model 35 FANN VG Meter with No. 1 spring and standard bob and sleeve to determine when complete hydration has occurred. For example, 300 ml of API brine are added to a one-liter Waring blendor jar and mixed at a low rate followed by adding one ml of the above-described inverter. Ten grams of polymer emulsion are added while mixing at 1500 rpm. Mixing is continued for one minute and viscosity is measured.

The results of these tests are shown in Table III.

TABLE III

Viscosity Properties of Inverted Polymers
Polymer Concentration: 1% by Weight of Fluid
Temperature: Ambient Conditions

| Polymer No. | Steady State FANN Dial Readings @ 100, 200 and 300 rpm: Deionized Water 100 | Deionized Water 200 | Deionized Water 300 | API Brine 100 | API Brine 200 | API Brine 300 |
|---|---|---|---|---|---|---|
| 8 | 84 | 116 | 141 | 17 | 27 | 35 |
| 9 | 71 | 101 | 126 | 7 | 12 | 16 |
| 10 | 74 | 107 | 137 | 7 | 11 | 14 |
| 11 | 47 | 62 | 78 | 51 | 72 | 91 |
| 13 | 92 | 126 | 152 | 4 | 7 | 9 |
| 14 | 50 | 75 | 93 | 19 | 28 | 37 |
| 16 | 61 | 91 | 115 | 12 | 19 | 25 |
| 17 | 48 | 66 | 80 | 28 | 42 | 53 |
| 18 | 15 | 25 | 33 | 13 | 21 | 29 |
| 19 | 53 | 69 | 82 | 40 | 57 | 72 |
| 20 | 55 | 75 | 91 | 29 | 44 | 56 |
| 21 | 53 | 72 | 86 | 28 | 41 | 53 |

F. Temperature Stability

100 g of the hydrated polymer are placed in a glass pressure vessel. A desired amount of crosslinker such as 0.2% zirconium oxychloride is added to the vessel. The vessel is sealed and agitated to thoroughly mix the polymer and crosslinker. The vessel is then heated to the desired temperature by placing it in a heated oil bath. At desired intervals the sample is inspected and the stability of the crosslinked polymer visually noted.

The results of these tests are given in Table IV below.

TABLE IV

Crosslinked Polymer Stability at 121°C (250°F)
Polymer Concentration: 1%
Base Fluid: API Brine

| Polymer No. | $N_2$ [1] Purged | Crosslinker Name | Crosslinker %[2] | Stability hrs[3] | Final pH[4] | Observations |
|---|---|---|---|---|---|---|
| 21[5] | No | Potassium Pyroanti-monate | 0.4 | <24 | 8.4 | homogeneous - no crosslinked gel |
| 21 | No | Formic Acid | 0.1 | | | homogeneous - no crosslinked gel |
| | | Potassium Pyroanti-monate | 0.4 | <24 | 4.2 | |
| 21 | No | Potassium Pyroanti-monate | 0.4 | | | homogeneous - crosslinked gel @ 48 hrs. |
| | | Zicronium Oxychloride | 0.1 | >48<96 | 8.1 | |
| 20[6] | No | Potassium Pyroanti-monate | 0.4 | <24 | 8.4 | homogeneous - no crosslinked gel |
| 20 | No | Formic Acid | 0.1 | | | homogeneous - no crosslinked gel |
| | | Potassium Pyroanti-monate | 0.4 | <24 | 4.5 | |
| 20 | No | Potassium Pyroanti-monate | 0.4 | | | homogeneous - crosslinked gel @ 48 hrs. |
| | | Zirconium Oxychloride | 0.1 | >48<96 | 7.8 | |
| 19[7] | No | Potassium Pyroanti-monate | 0.4 | <24 | 8.3 | homogeneous - no crosslinked gel |
| 19 | No | Formic Acid | 0.1 | | | homogeneous - no crosslinked gel |
| | | Potassium Pyroanti-monate | 0.4 | <24 | 4.4 | |

(TABLE IV CONTINUED)

| | | | | | | |
|---|---|---|---|---|---|---|
| 19 | No | Potassium Pyroantimonate | 0.4. | | | homogeneous - less viscosity than 21 or 20 |
| | | Zirconium Oxychloride | 0.1 | >48<96 | 7.4 | |
| 21 | No | Zirconium Oxychloride | 0.2 | >72 | 6.0 | crosslinked gel - some free $H_2O$ |
| 21 | No | Zirconium Oxychloride | 0.2 | <16 | 8.5[8] | gel separated |
| 21 | No | Zirconium Lactate with Triethanolamine | 0.3 | >48<72 | 8.0 | crosslinked gel - ½ free $H_2O$ |
| 21 | No | Zirconium Lactate with Triethanolamine | 0.3 | >24<48 | 8.7[8] | slight crosslink - free $H_2O$ |
| 20 | No | Zirconium Oxychloride | 0.2 | >48<72 | 6.3 | rigid crosslinked gel @ 48 hrs. |
| 20 | No | Zirconium Oxychloride | 0.2 | <16 | 8.4[8] | no crosslink - phase separation |
| 20 | No | Zirconium Lactate with Triethanolamine | 0.3 | >24<48 | 8.1 | slight crosslink - rehealed on cooling |
| 20 | No | Zirconium Lactate with Triethanolamine | 0.3 | >24<48 | 8.7[8] | slightly better than above gel |
| 19 | No | Zirconium Oxychloride | 0.2 | >24<48 | 5.3 | crosslinked gel - ½ free $H_2O$ |
| 19 | No | Zirconium Oxychloride | 0.2 | <16 | 8.3[8] | homogeneous - no crosslinked gel |
| 19 | No | Zirconium Lactate with Triethanolamine | 0.3 | >16<24 | 8.0 | homogeneous - no crosslinked gel |

TABLE IV (continued)

| | | | | | | |
|---|---|---|---|---|---|---|
| 19 | No | Zirconium Lactate with Triethanol-amine | 0.3 | <16 | 8.7[8] | homogeneous - no crosslinked gel |
| 18 | Yes | Zirconium Oxychloride | 0.1 | <19 | --- | polymer flocculated |
| 18 | Yes | Zirconium Oxychloride | 0.2 | <19 | --- | polymer flocculated |
| 18 | Yes | Zirconium Lactate | 0.1 | >48<72 | --- | polymer separated - best @ 72 hrs. |
| 18 | Yes | Zirconium Lactate | 0.2 | >48<72 | --- | polymer separated |
| 18 | Yes | Zirconium Lactate | 0.3 | >48<72 | --- | polymer separated - best at 48 hrs. |
| 18 | Yes | Zirconium Acetate | 0.2 | <19 | | polymer flocculated |
| 17 | Yes | Zirconium Oxychloride | 0.1 | >72<144 | | rigid crosslinked gel @ 72 hrs. |
| 17 | Yes | Zirconium Oxychloride | 0.2 | >72<144 | | same as above - trace free $H_2O$ |
| 17 | Yes | Zirconium Lactate | 0.1 | >72<144 | | slight crosslinked gel - trace free $H_2O$ |
| 17 | Yes | Zirconium Lactate | 0.2 | >72<144 | | moderate crosslinked gel - trace free $H_2O$ |
| 17 | Yes | Zirconium Lactate | 0.3 | >72<144 | | rigid crosslinked gel - trace free $H_2O$ |
| 17 | Yes | Zirconium Acetate | 0.2 | >72<144 | | less rigid than above test |
| 18 | Yes | Zirconium Lactate with Triethanol-amine | 0.1 | >6<24 | | polymer flocculated - free $H_2O$ |
| 18 | Yes | Zirconium Lactate with Triethanol-amine | 0.2 | >6 | | sample lost, broke sample jar |
| 18 | Yes | Zirconium Lactate with Triethanol-amine | 0.3 | >24<48 | | more flocculated polymer than above |

(TABLE IV CONTINUED)

| | | | | |
|---|---|---|---|---|
| 17 | Yes | Zirconium Lactate with Triethanol-amine 0.2 | >72 | crosslinked gel - free $H_2O$ |
| 17 | Yes | Zirconium Lactate with Triethanol-amine 0.3 | >72 | weak crosslinked gel - free $H_2O$ |
| 17 | Yes | Zirconium Lactate with Triethanol-amine 0.4 | >72 | same as above with less free $H_2O$ |
| 13 | Yes | Zirconium Lactate with viscosity 0.007 Pa s (7cp) Triethanol-amine 0.3 | --- | no indication of crosslink - base gel |
| 13 | Yes | Zirconium Lactate with viscosity 0.007 Pa s (7cp) Triethanol-amine 0.6 | --- | no indication of crosslink - base gel |
| 16 | Yes | Zirconium Lactate with Triethanol-amine 0.3 | >1<66 | poor crosslink - base gel viscosity 0.012 Pa s (12cp) |
| 16 | Yes | Zirconium Lactate with Triethanol-amine 0.6 | >1<66 | poor crosslink - base gel viscosity 0.012 Pa s (12cp) |
| 17 | Yes | Zirconium Lactate with Triethanol-amine 0.3 | >96<240 | crosslinked gel with free $H_2O$ @ 96 hrs. |
| 17 | Yes | Zirconium Oxychloride 0.3 | >1<66 | overcrosslinked - majority free $H_2O$ |
| 17 | Yes | Zirconium Oxychloride 0.6 | >1<66 | same as above test |
| 18 | Yes | Zirconium Lactate with Triethanol- 0.3 | >1<66 | crosslinked gel with free $H_2O$ @ 66 hrs. |

(TABLE IV CONTINUED)

| | | | | | |
|---|---|---|---|---|---|
| 18 | Yes | Zirconium Lactate with Triethanol-amine | 0.6 | >1<66 | same as above test |
| 18 | Yes | Zirconium Oxychloride | 0.3 | >1<66 | majority free $H_2O$ with crosslinked gel |

1 to reduce oxygen level $N_2$ was bubbled through gels and pressure vessels were purged

2 % = volume % based on total weight of gel

3 stability hrs. - the majority of the gel had some crosslinked character. Some free $H_2O$ may be present. No precipitate noted.

4 final pH - pH was obtained after test was completed and sample cooled to ambient condition

5 initial pH of base gel 6.73

6 initial pH of base gel 7.0

7 initial pH of base gel 6.9

8 pH adjusted to this value with NaOH

Steady state viscosity properties of polymers 8 through 21 in deionized water and API brine are shown in Table III. The relative molecular weights and degrees of ionic character of the prepared copolymers are utilized to evaluate the synthesis conditions. Viscosity properties in deionized water are a function of molecular weight and degree of ionic character while the viscosity difference in these two base fluids is predominantly a function of the degree of ionic character.

Preliminary stability data at 121°C (250°F) for several polymers crosslinked with various metal crosslinkers are presented in Table IV. Gel stability is dependent upon the polymer, crosslinker, crosslinker concentration, pH and oxygen content. In general, the most stable gels are formed with polymers 17, 20 and 21 when crosslinked with 0.1 or 0.2% of zirconium oxychloride or 0.3% of zirconium lactate with triethanolamine.

Example 4

Vinyl monomers containing vicinal diol groups are prepared as follows.

A. Methacrylamidopropyldimethyl-2,3-dihydroxypropylammonium sulfate (MAPDMDAPAS).

To a 1-liter glass beaker containing a magnetic stirrer is added 170.26 (1 mole) of DMAPMA and 170.26 g of deionized water while stirring. Initial pH and temperature are 11.2 and 23.1°C, respectively. Two additional funnels are suspended above the beaker; one contains 75.6 g (1 mole) of glycidol and the other contains 98.2 g of 50% $H_2SO_4$. The pH and temperature are monitored continuously during the drop-wise addition of glycidol. Temperature is maintained between 19.5° and 27.5° by placing the beaker in an ice bath. The pH is maintained between 10.6 and 11.2 by adding 50% $H_2SO_4$ as needed. All of the glycidol is added within 1 hour and 4 minutes. An additional 75.6 g of water is added to the reaction mixture; a portion is flowed through the addition funnel which contained the glycidol and the remainder is added to the addition funnel containing the remaining $H_2SO_4$. The ice bath surrounding the reaction vessel is removed and replaced with a warm water bath in order to raise the reaction temperature to 40°C. The remaining acid and water mixture is added to the reaction vessel over a period of 2 hours and 41 minutes. During this stepwise addition the temperature is held at about 40°C and the pH is maintained between 11.3 and 10.1 until the last portion of acid is added. The final pH is 4.55. The reaction mixture is then placed in a sealed brown bottle and submerged in a 42°C bath. The reaction mixture is removed at 16 hours. The final pH of the product is 5.2 at room temperature.

B. Methacrylamidopropyldimethyl-2,3-dihydroxypropylammonium chloride (MAPDMDHPAC)

To a 1-quart brown bottle is added 170.3 g (1 mole) DMAPMA and 280.8 g of deionized water. Mixing is accomplished by swirling the bottle. To this mixture is added 110.5 g (1 mole) of 3-chloro-1,2-propanediol. A small exotherm is observed. The sealed bottle containing the reaction mixture is submerged in a water bath controlled at about 40°C. After reacting at this temperature for 20 hours the reaction mixture is removed.

The quaternary ammonium chloride monomer (prepared according to Procedure B) is formed by substitution of the chloride of α-chlorohydrin with the nitrogen of the tertiary amine. The quantity of chloride ion produced during the reaction is determined by titration with silver nitrate. Based on this analysis, it is calculated that 99.6% of the α-chlorohydrin is reacted and therefore, the percent of conversion is 99.6%.

The vicinal diol content of MAPDMDHPAS and MAPDMDHPAC are determined to be 53.0% and 50.6%, respectively. The theoretical diol content of each monomer is 50.0%, since each is prepared as a 50% aqueous solution.

Example 5

A variety of polymers containing vicinal diol groups are prepared. The polymers are hydrated and the resulting gels are evaluated for stability at high temperature. The hydrated polymers are then crosslinked and evaluated for stability at high temperatures.

Thermal stability tests of hydrated emulsion polymers 121°C (250°F) in API brine are summarized in Tables V and VI. Thermal stability tests of hydrated solution polymers at 138°C (280°F) in API brine are summarized in Tables V and VI. Thermal stability tests of hydrated solution polymers at 138°C (280°F) in API brine are summarized in Table VII. The solution polymers are prepared by reacting the starting materials and initiators in a 2% potassium chloride solution.

Procedure

To obtain a 100 g sample of hydrated polymer gel, 97.7 g of deionized water is added to a 500 ml Waring blendor. An inverter such as a 50% by weight aqueous solution of dimethylbenzyltallow-ammonium chloride is added in an amount of 0.33 ml to the water with gentle mixing. The emulsion polymer (3.33 g) is quickly added with a syringe while mixing at about 1500 rpm. Mixing is continued for 2 minutes. The sample is left static at least one hour at ambient temperature to fully hydrate before use or evaluation.

A 100 g sample of hydrated base gel is placed in a 250 ml (8 oz.) glass jar. The sample is purged 30 minutes by bubbling $N_2$ through the sample. The jar is sealed and then placed inside a purged pressure

vessel. The vessel is placed into an oil bath at the desired temperature for the required time period. The vessel is then removed and cooled to ambient temperature. The sample is removed and evaluated. Data such as pH, viscosity and gel conditions are recorded.

TABLE V

Thermal Stability of 1% Emulsion Polymers at 121°C (250°F) in API Brine

| Polymer | Initial* Viscosity Pa s | (cp) | Final* Viscosity Pa s | (cp) | Time at 121°C (250°F) (days) | Viscosity Retained % |
|---|---|---|---|---|---|---|
| 80.10Q.10DS.P21 | .2 | 200 | .012 | 12.0 | 2.25 | 6 |
| 50.40.10DS.P24 | .085 | 85 | .019 | 19.0 | 5.0 | 22 |
| 50.40.10DS.P24 | .085 | 85 | .008 | 7.5 | 12.0 | 9 |
| 50.40Q.10DS.P23 | .075 | 75 | .007 | 6.5 | 5.0 | 9 |
| 50.40Q.10DS.P25 | .085 | 85 | .010 | 10.0 | 5.0 | 12 |
| 90.0.10DS.P20 | | | .019 | 19.0 | 2.25 | |
| 90.0.10Q.P19 | | | .006 | 6.0 | 2.25 | |

* Viscosity measured on a Brookfield LVT using a number 1 spindle at 6 rpm.

TABLE VI

Thermal Stability of 1% Emulsion Polymers in API Brine

| Polymer | Initial* Viscosity Pa s | (cp) | Final* Viscosity Pa s | (cp) | Retained Viscosity % | Temperature °C | (°F) | Time at Temperature (days) |
|---|---|---|---|---|---|---|---|---|
| 70.20.10DS.P43 | .13 | 130 | .02 | 20 | 14 | 121 | 250 | 5.0 |
| 70.20.10DS.P43 | .13 | 130 | .055 | 55 | 42 | 121 | 250 | 7.0 |
| 70.20.10DS.P43 | .13 | 130 | .15 | 150 | 115 | 121 | 250 | 10.0 |
| 50.40.10DS.P41 | .272 | 272 | .826 | 826 | 304** | 138 | 280 | 0.9 |
| 50.40.10DS.P41 | .345 | 345 | .03 | 30 | 8 | 138 | 280 | 0.9 |
| 50.40.10DS.P40 | .18 | 180 | .13 | 130 | 72 | 121 | 250 | 3 |
| 50.40.10DS.P40 | .18 | 180 | .10 | 100 | 56 | 121 | 250 | 5 |
| 50.40.10DS.P40 | .18 | 180 | .035 | 35 | 20 | 121 | 250 | 7 |
| 50.40.10DS.P40 | .18 | 180 | .01 | 10 | 6 | 121 | 250 | 10 |
| 50.40.10DS.P41 | .19 | 190 | .23 | 230 | 120 | 121 | 250 | 3 |
| 50.40.10DS.P41 | .19 | 190 | .065 | 65 | 34 | 121 | 250 | 5 |
| 50.40.10DS.P41 | .19 | 190 | .021 | 21 | 11 | 121 | 250 | 7 |
| 50.40.10DS.P41 | .19 | 190 | .025 | 25 | 13 | 121 | 250 | 10 |
| 60.30.10DS.P42 | .15 | 150 | .1 | 100 | 67 | 121 | 250 | 3 |
| 60.30.10DS.P42 | .15 | 150 | .025 | 25 | 17 | 121 | 250 | 5 |
| 60.30.10DS.P42 | .15 | 150 | .03 | 30 | 20 | 121 | 250 | 7 |

*Viscosity measured on a Brookfield LVT using a number 1 spindle at 6 rpm.

** Sample believed to be contaminated with metal ions during test.

TABLE VII

Thermal Stability of 1% Solution Polymers at 138°C (280°F) in API Brine for 22 Hours

| Polymer | Initial* Viscosity Pa s | (cp) | Final* Viscosity pa s | (cp) | Viscosity Retained % |
|---|---|---|---|---|---|
| 75.20.5DS.9K | .617 | 617 | .320 | 320 | 52 |
| 70.20.10DS.7K | .087 | 87 | .049 | 49 | 56 |
| 70.20.10DS.76 | .058 | 58 | .054 | 54 | 93 |
| 70.20.10DS.7K | .101 | 101 | .042 | 42 | 42 |
| 70.20.10Q.80 | .121 | 121 | .079 | 79 | 65 |
| 70.20.10Q.80 | .119 | 119 | .026 | 26 | 22 |
| 70.20.10Q.78 | .094 | 94 | .043 | 43 | 46 |
| 70.20.10A.106 | .067 | 67 | .028 | 28 | 42 |
| 50.40.10DS.8K | .074 | 74 | .049 | 49 | 66 |
| 50.40.10DS.8K | .078 | 78 | .047 | 47 | 60 |
| 50.40.10DS.8K | .082 | 82 | .044 | 44 | 54 |
| 0.90.10DS.87 | .036 | 36 | .055 | 55 | 152 |
| 0.90.10DS.12K | .025 | 25 | .024 | 24 | 96 |
| 0.90.10DS.12K | .024 | 24 | .023 | 23 | 96 |
| 0.90.10DS.12K | .021 | 21 | .016 | 16 | 76 |

* Viscosity measured on a Brookfield LVT using a number 1 spindle at 6 rpm.

Tables V, VI and VII show the superiority of the 0.90.10DS polymer formulation over other polymer formulations. The stability testing of inverse emulsion polymers at 121° and 138°C (250° and 280°F) shows a loss of viscosity with time except in the case of 70.20.10DS.P43 (see Table IV). This polymer at 1% concentration at 121°C (250°F) in API brine gives a decrease in viscosity with time until 10 days when a viscosity increase is observed. This viscosity increase is supported by the 138°C (280°F) studies. The 70.20.10DS.P43 solutions appear to crosslink or get thicker after 22 hours. This phenomena is not observed using the equivalent solution polymer, 70.20.10DS.7K. This indicates that there may be some differences in the emulsion and solution polymers.

The visual evaluation of crosslinked polymers for thermal stability is more difficult than the evaluation of the base hydrated polymers. The stability of the crosslinked gel is sensitive to the crosslinker, crosslinker concentration and polymer concentration in addition to the temperature. The crosslinked gels are evaluated on a scale as follows:

1. failure — no viscosity or precipitate forms;
2. 2 phase — separation of polymer and free fluid;
3. homogeneous — viscosity present but not a lipping gel;
4. lipping — crosslinked fluid which forms a tongue upon transfer;
5. rigid — crosslinked fluid which tries to retain its shape.

The initial testing of the thermal stability of the crosslinked gels is performed at 82°C (180°F) and is summarized in Table VIII. The polymers react with a variety of crosslinkers and are stable for extended periods of time at 82°C (180°F).

The crosslinked polymers are evaluated at 138° and 149°C (280°F and 300°F) in API brine at 1 and 0.5% polymer concentrations. A concentration range of zirconium lactate crosslinker of 0.075 to 0.6 volume/volume % is used to evaluate these polymers. The results of these tests are given in Tables IX and X.

Procedure

Stability tests on crosslinked.polymers are performed by placing 100 g samples of hydrated base gels in 250 ml (8 oz.) glass jars. The designated amount and type of crosslinker is added with a micropipette syringe. The jars are each sealed and then placed inside the vessel to cover the sample level in the jar. The vessel is placed in an oil bath of the desired temperature for the required time period. The vessel is then removed and cooled to ambient temperature. The samples are removed and visually evaluated.

TABLE VIII

Thermal Stability of Crosslinked Gels at 82°C (180°F) in API Brine

| Polymer | Polymer Concentration (%) | Crosslinker | Crosslinker Concentration (%) | Time at Temperature (days) | Gel Evaluation |
|---|---|---|---|---|---|
| 50.40.10DS.6K | 1.0 | Potassium Pyroantimonate | .4 | 8 | homogeneous |
| 50.40.10DS.6K | 1.0 | Zirconium Acetate | .2 | 8 | rigid |
| 50.40.10DS.6K | 1.0 | Zirconium Lactate with Amine | .4 | 8 | homogeneous |
| 50.40.10DS.P24 | 1.0 | Potassium Pyroantimonate | .4 | .75 | 2 phase |
| 50.40.10DS.P24 | 1.0 | Zirconium Acetate | .2 | .75 | rigid |
| 50.40.10DS.P24 | 1.0 | Zirconium Lactate | .4 | .75 | rigid |
| 50.40.10DS.P24 | 1.0 | Basic Aluminum Acetate | .4 | .75 | 2 phase |
| 50.40.10DS.P24 | 1.0 | Zirconium Oxychloride | .2 | .75 | rigid |
| 50.40.10DS.P24 | 1.0 | Zirconium Lactate | .4 | 3 | rigid |
| 50.40.10DS.P24 | 1.0 | Zirconium Lactate | .4 | 5 | rigid |
| 50.40.10DS.P24 | 1.0 | Zirconium Lactate | .4 | 10 | rigid |
| 50.40.10DS.P26 | 1.0 | Zirconium Lactate | .4 | 3 | rigid |
| 50.40.10DS.26 | 1.0 | Zirconium Lactate | .4 | 5 | rigid |
| 50.40.10DS.26 | 1.0 | Zirconium Lactate | .4 | 10 | rigid |
| 55.40.5DS.5K | 1.0 | Potassium Pyroantimonate | .4 | 8 | homogeneous |
| 55.40.5DS.5K | 1.0 | Zirconium Acetate | .2 | 8 | rigid |
| 55.40.5DS.5K | 1.0 | Zirconium Lactate with Amine | .4 | 8 | homogeneous |
| 55.40.5DS.P27 | 1.0 | Zirconium Lactate | .4 | 3 | rigid |
| 55.40.5DS.P27 | 1.0 | Zirconium Lactate | .4 | 5 | rigid |
| 55.40.5DS.P27 | 1.0 | Zirconium Lactate | .4 | 10 | rigid |
| 0.90.10DC.124 | 0.5 | Zirconium Lactate | .2 | 2.8 | homogeneous |
| 0.90.10DC.124 | 0.5 | Zirconium Lactate | .6 | 2.8 | rigid |
| 0.90.10DC.129 | 0.5 | Zirconium Lactate | .2 | 2.8 | lipping |
| 0.90.10DS.123 | 0.5 | Zirconium Lactate | .2 | 2.8 | lipping |

TABLE IX

Thermal Stability of Crosslinked Gels at 138°C (280°F) in API Brine

| Polymer | Polymer Concentration (%) | Zirconium Lactate Concentration (%) | Time at Temperature (days) | Gel Evaluation |
|---|---|---|---|---|
| 50.40.10DS.8K | .5 | .15 | 2.8 | 2 phase |
| 0.90.10DS.118 | .5 | .6 | 2 | 2 phase |
| 0.90.10DS.118 | .5 | .6 | 1 | 2 phase |
| 0.90.10DS.118 | .5 | .4 | 2 | 2 phase |
| 0.90.10DS.118 | .5 | .4 | 1 | 2 phase |
| 0.90.10DS.118 | .5 | .2 | 1 | lipping |
| 0.90.10DS.118 | .5 | .3 | .9 | 2 phase |
| 0.90.10DS.118 | .5 | .15 | .9 | homogeneous |
| 0.90.10DS.118 | .5 | .075 | .9 | homogeneous |
| 0.90.10DS.118 | .5 | .2 | 7 | homogeneous |
| 0.90.10DS.118 | .5 | .2 | 14 | homogeneous |
| 0.90.10DS.118 | .5 | .2 | 21 | 2 phase |
| 0.90.10DS.118 | .5 | .15 | 7 | homogeneous |
| 0.90.10DS.118 | .5 | .15 | 10 | lipping |
| 0.90.10DS.118 | .5 | .15 | 14 | 2 phase |
| 0.90.10DS.118 | .5 | .1 | 7 | homogeneous |
| 0.90.10DS.118 | 1.0 | .6 | .9 | lipping |
| 0.90.10DS.118 | 1.0 | .4 | .9 | lipping |
| 0.90.10DS.118 | 1.0 | .3 | .9 | lipping |
| 0.90.10DS.118 | 1.0 | .15 | .9 | lipping |

TABLE X

Thermal Stability of Crosslinked Gelsat 138°C (300°F) in API Brine

| Polymer | Polymer Concentration (%) | Zirconium Lactate Concentration (%) | Time at Temperature (days) | Gel Evaluation |
|---|---|---|---|---|
| 0.90.10DS.118 | .5 | .3 | 0.9 | lipping |
| 0.90.10DS.118 | .5 | .3 | 1.8 | 2 phase |
| 0.90.10DS.118 | .5 | .25 | 0.9 | lipping |
| 0.90.10DS.118 | .5 | .25 | 1.8 | 2 phase |
| 0.90.10DS.118 | .5 | .2 | 0.9 | lipping |
| 0.90.10DS.118 | .5 | .2 | 1.8 | lipping |
| 0.90.10DS.118 | .5 | .2 | 4.0 | lipping |
| 0.90.10DS.118 | .5 | .15 | 0.9 | lipping |
| 0.90.10DS.118 | .5 | .15 | 1.8 | lipping |
| 0.90.10DS.118 | .5 | .15 | 4.0 | lipping |
| 0.90.10DS.118 | .5 | .1 | 0.9 | homogeneous |
| 0.90.10DS.118 | .5 | .1 | 1.8 | lipping |
| 0.90.10DS.118 | .5 | .1 | 4.0 | homogenous |
| 0.90.10DS.118 | .5 | .05 | 0.9 | homogeneous |
| 0.90.10DS.118 | .5 | .05 | 1.8 | homogenous |
| 0.90.10DS.123 | .5 | .2 | 0.9 | lipping |
| 0.90.10DS.123 | .5 | .2 | 1.8 | lipping |
| 0.90.10DS.123 | .5 | .2 | 3.7 | lipping |
| 0.90.10DS.131 | .5 | .2 | 6.0 | lipping |
| 0.90.10DS.131 | .5 | .2 | 10.0 | lipping |
| 0.90.10DS.131 | .5 | .2 | 14.0 | lipping |
| 0.90.10DS.131 | .5 | .6 | 4.0 | 2 phase |
| 0.85.15DS.132 | .5 | .2 | 4.0 | lipping |
| 0.95.5DS.130 | .5 | .2 | 4.0 | homogeneous* |
| 0.95.5DS.130 | .5 | .2 | 4.0 | 2 phase |

* The sample contained 10% by weight 12-200 mesh dolomite.

Example 8

A vicinal diol containing polymer is prepared as follows. 100 g of a 1% active solution of a copolymer of DMAEMA and acrylamide in equal mole percentages are adjusted to a pH of 10 with sodium hydroxide. This solution is reacted for one hour at ambient temperature with 0.15 g of glycidol. The resulting reaction mixture (gel) is crosslinkable with zirconium lactate and shows better thermal stability than the starting DMAEMA-acrylamide copolymer when crosslinked with zirconium lactate.

**Claims**

1. A method of treating a high temperature subterranean formation, which comprises contacting said formation with a highly viscous gel formed of an aqueous fluid, a crosslinking agent and a water-soluble polymer containing crosslinkable vicinal diol groups and derived by reacting in an aqueous solution a water-soluble vinyl monomer or polymer thereof, which monomer is a tertiary amine having the formula:

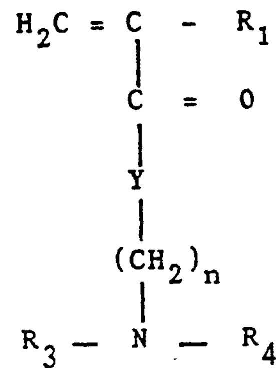

or

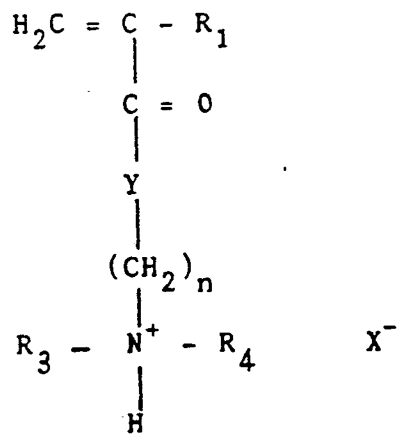

wherein $R_1$ is hydrogen or methyl; Y is oxygen or NH; $R_3$ and $R_4$ are independently methyl or ethyl; n is 2 or 3; and $X^-$ is a halogen, $1/2(SO_4)^=$, $CH_3SO_4^-$, $C_2H_3SO_4^-$ or $CH_3COO^-$; with at least one reactive vicinal diol-forming or -containing compound selected from glycidol and the 3-halo-1,2-propanediols.

2. The use of a highly viscous gel for treating a high temperature subterranean formation, said gel being formed of an aqueous fluid, a crosslinkable agent and a water-soluble polymer containing crosslinkable vicinal diol groups and derived from a monomer by reacting in an aqueous solution a water-soluble vinyl monomer, or polymer thereof, which monomer is a tertiary amine having the formula:

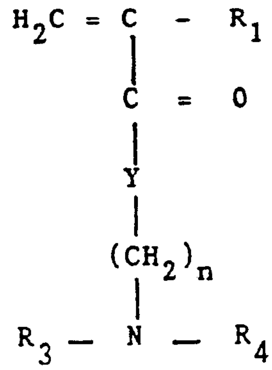

or

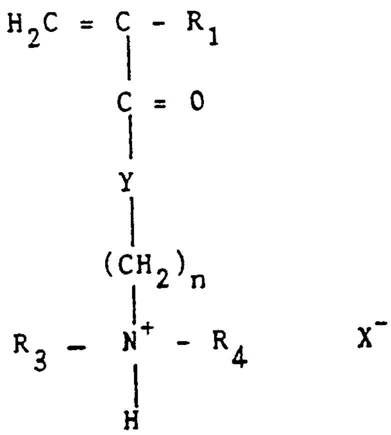

wherein $R_1$ is hydrogen or methyl; Y is oxygen or NH; $R_3$ and $R_4$ are independently methyl or ethyl; n is 2 or 3; and $X^-$ is a halogen, $1/2(SO_4)^=$, $CH_3SO_4^-$, $C_2H_3SO_4^-$ or $CH_3COO^-$; with at least one reactive vicinal diol-forming or -containing compound selected from glycidol and the 3-halo-1,2-propanediols.

3. A method or use according to claim 1 or 2, wherein $R_1$ is methyl, $R_3$ and $R_4$ are each methyl, n is 3 and $X^-$ is $1/2(SO_4)^=$.

4. A method or use according to claim 1 or 2, wherein $R_1$ is methyl, $R_3$ and $R_4$ are each methyl, n is 3 and $X^-$ is $Cl^-$.

5. A method or use according to claim 1 or 2, wherein $R_1$ is methyl.

6. A method or use according to any of claims 1 to 5, wherein said water-soluble polymer is a copolymer or a terpolymer of a said monomer with other monomer copolymerisable therewith.

7. A method or use according to claim 6, wherein said other monomer is one or more of N,N-dimethylacrylamide, acrylamide, methacrylamide, 2-acrylamido-2-methylpropanesulfonic acid, sodium styrene sulfonate, N-vinyl-2-pyrrolidone and acrylic acid.

8. A method or use according to claim 7, wherein said water-soluble polymer is a copolymer of methacrylamidopropyldimethyl-2,3-dihydroxypropylammonium sulfate and N,N-dimethylacrylamide, or of methacrylamidopropyldimethyl-2,3-dihydroxypropylammonium chloride and N,N-dimethylacrylamide.

9. A method or use according to any of claims 1 to 8, wherein said crosslinking agent is selected from water-soluble salts and complexes of mutivalent cations.

**Patentansprüche**

1. Verfahren zur Behandlung einer unterirdischen Formation hoher Temperatur, bei dem die Formation mit einem hochviskosen Gel in Berührung gebracht wird, das aus einem wäßrigen Fluid, einem Vernetzungsmittel und einem wasserlöslichen Polymer mit vernetzbaren vicinalen Diolgruppen gebildet wird, und das Polymer aus einem wasserlöslichen Vinylmonomer, das ein tertiäres Amin der Formel

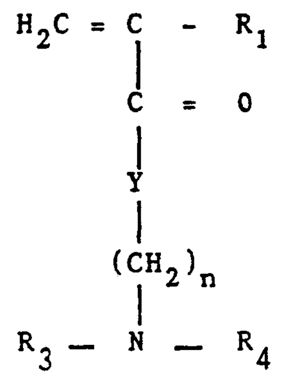

oder

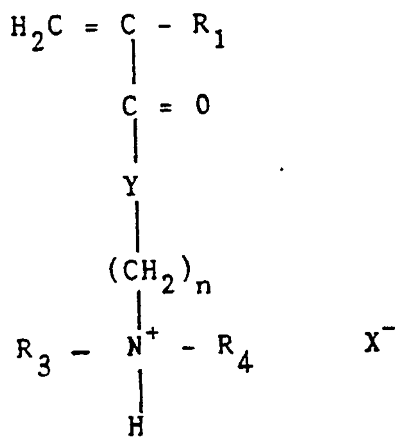

in der $R_1$ Wasserstoff oder Methyl, Y Sauerstoff oder NH, $R_3$ und $R_4$ unabhängig voneinander Methyl oder Ethyl, n = 2 oder 3 und $X^-$ Halogen, 1/2 $SO_4^-$, $CH_3SO_4^-$, $C_2H_3SO_4^-$ oder $CH_3COO^-$ sind, oder dessen Polymer durch Umsetzung mit wenigstens einer reaktiven, vicinales Diol bildenden oder enthaltenden Verbindung, die us Glycidol und 3-Halogen-1,2-propandiol ausgewählt wird, in wäßriger Lösung erhalten wird.

2. Verwendung eines hochviskosen Gels zur Behandlung einer unterirdischen Formation hoher Temperatur, das aus einem wäßrigen Fluid, einem Vernetzungsmittel und einem wasserlöslichen Polymer mit vernetzbaren vicinalen Diolgruppen gebildet wird, welches aus einem wasserlöslichen Vinylmonomer, das ein tertiäres Amin der Formel

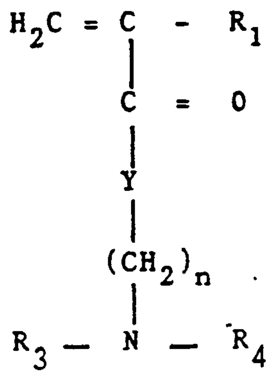

oder

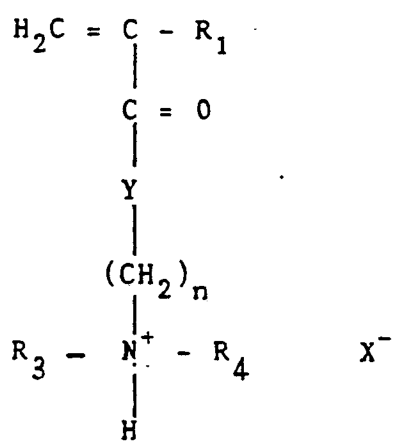

in der $R_1$ Wasserstoff oder Methyl, Y Sauerstoff oder NH, $R_3$ und $R_4$ unabhängig voneinander Methyl oder Ethyl, n = 2 oder 3 und $X^-$ Halogen, 1/2 $SO_4^-$, $CH_3SO_4^-$, $C_2H_3SO_4^-$ oder $CH_3COO^-$ sind, oder dessen Polymer durch Umsetzung mit wenigstens einer reaktiven, vicinales Diol bildenden oder enthaltenden Verbindung, die aus Glycidol und 3-Halogen-1,2-propandiol ausgewählt wird, in wäßriger Lösung erhalten wird.

3. Verfahren oder Verwendung nach Anspruch 1 oder 2, dadurch gekennzeichnet, daß $R_1$ Methyl, $R_3$ und $R_4$ jeweils Methyl, n = 3 und $X^-$ 1/2 $SO_4^-$ sind.
und $R_4$ jeweils Methyl, n = 3 und $X^-$ $Cl^-$ sind.

5. Verfahren oder Verwendung nach Anspruch 1 oder 2, dadurch gekennzeichnet, daß $R_1$ Methyl ist.

6. Verfahren oder Verwendung nach einem der Ansprüche 1 bis 5, dadurch gekennzeichnet, daß das wasserlösliche Polymer ein Copolymer oder Terpolymer des Monomers mit anderen, damit copolymerisierbaren Monomeren ist.

7. Verfahren oder Verwendung nach Anspruch 6, dadurch gekennzeichnet, daß das andere Monomer eines oder mehrere der Monomeren N,N-Dimethylacrylamid, Acrylamid, Methacrylamid, 2-Acrylamido-2-methylpropansulfonsäure, Natriumstyrolsulfonat, N-Vinyl-2-pyrrolidon und Acrylsäure umfaßt.

8. Verfahren oder Verwendung nach Anspruch 7, dadurch gekennzeichnet, daß das wasserlösliche Polymere ein Copolymer aus Methacrylamidopropyldimethyl-2,3-dihydroxypropylammoniumsulfat und N,N-Dimethylacrylamid oder aus Methacrylamidopropyldimethyl-2,3-dihydroxypropylammoniumchlorid und N,N-Dimethylacrylamid ist.

9. Verfahren oder Verwendung nach einem der Ansprüche 1 bis 8, dadurch gekennzeichnet, daß das Vernetzungsmittel aus wasserlöslichen Salzen und Komplexen mehrwertiger Kationen ausgewählt ist.

**Revendications**

1. Procédé de traitement d'une formation souterraine à température élevée, selon lequel on met en contact ladite formation avec un gel très visqueux formé à partir d'un fluide aqueux, d'un agent de réticulation et d'un polymère soluble dans l'eau contenant des groupes diol vicinaux réticulables, et préparé en faisant réagir, dans une solution aqueuse, un monomère vinylique soluble dans l'eau ou un polymère de celui-ci, ce monomère étant une amine tertiaire, de formule:

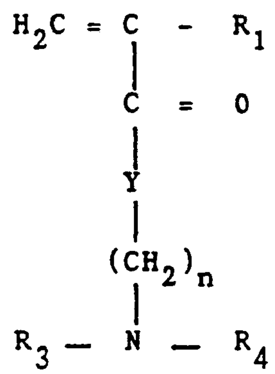

ou

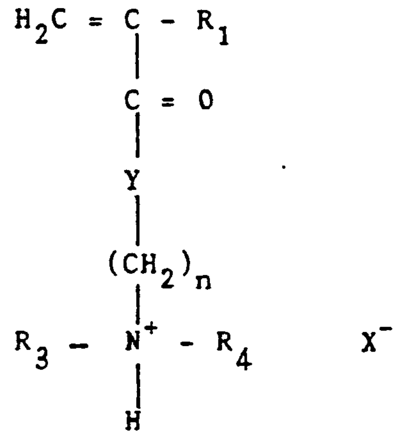

dans laquelle $R_1$ représente un atome d'hydrogène ou un groupe méthyle; Y représente un atome d'oxygène ou un groupe NH; $R_3$ et $R_4$ représentent indépendamment chacun un groupe méthyle ou éthyle; N est égal à 2 ou 3; et $X^-$ représente un atome d'halogène, un groupe $1/2(SO_4)^=$, $CH_3SO_4^-$, $C_2H_3SO_4^-$ ou $CH_3COO^-$; avec au moins un composé réactif contenant ou formant un groupe diol vicinal, choisi parmi le glycidol et les 3-halo-1,2-propanediols.

2. Utilisation d'un gel très visqueux pour le traitement d'une formation souterraine à haute température, ce gel étant formé d'un fluide aqueux, d'un agent de réticulation et d'un polymère soluble dans l'eau contenant des groupes diol vicinaux réticulables, et préparé à partir d'un monomère en faisant réagir, dans une solution aqueuse, un monomère vinylique soluble dans l'eau ou un polymère de celui-ci, ce monomère étant une amine tertiaire de formule:

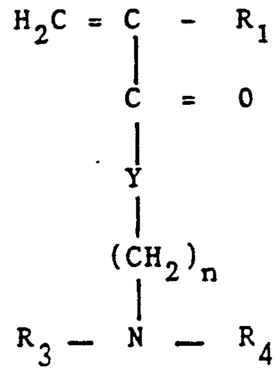

ou

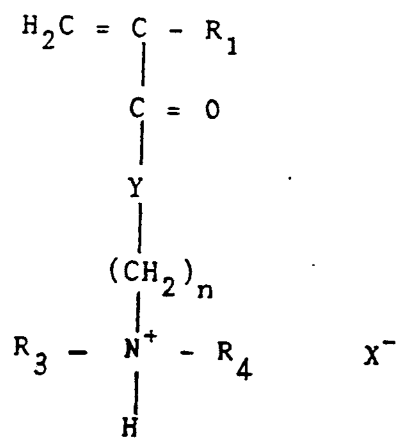

dans laquelle $R_1$ représente un atome d'hydrogène ou un groupe méthyle; Y représente un atome d'oxygène ou un groupe NH; $R_3$ et $R_4$ représentent indépendamment chacun un groupe méthyle ou éthyle; N est égal à 2 ou 3; et $X^-$ représente un atome d'halogène, un groupe $1/2(SO_4)^=$, $CH_3SO_4^-$, $C_2H_3SO_4^-$ ou $CH_3COO^-$; avec au moins un composé réactif contenant ou formant un groupe diol vicinal, choisi parmi le glycidol et les 3-halo-1,2-propanediols.

3. Procédé ou utilisation selon la revendication 1 ou 2, dans lequel $R_1$ représente un groupe méthyle, $R_3$ et $R_4$ représentent chacun un groupe méthyle, n est égal à 3, et $X^-$ représente un groupe $1/2(SO_4)^=$.

4. Procédé ou utilisation selon la revendication 1 ou 2, selon lequel $R_1$ représente un groupe méthyle, $R_3$ et $R_4$ représentent chacun un groupe méthyle, n est égal à 3, et $X^-$ représente un ion $Cl^-$.

5. Procédé ou utilisation selon la revendication 1 ou 2, selon lequel $R_1$ représente un groupe méthyle.

6. Procédé ou utilisation selon l'une quelconque des revendications 1 à 5, selon lequel le polymère soluble dans l'eau est un copolymère ou un terpolymère dudit monomère avec un autre monomère copolymérisable avec celui-ci.

7. Procédé ou utilisation selon la revendication 6, selon lequel ledit autre monomère, comprend un ou plusieurs des composés choisis parmi le N,N-diméthylacrylamide, l'acrylamide, le méthacrylamide, l'acide 2-acrylamido-2-méthylpropane sulfonique, le styrène sulfonate de sodium, la N-vinyl-2-pyrrolidone et l'acide acrylique.

8. Procédé ou utilisation selon la revendication 7, selon lequel le polymère soluble dans l'eau, est un copolymère du sulfate de méthacrylamidopropyldiméthyl-2,3-dihydroxypropylammonium et du N,N-diméthylacrylamide, ou du chlorure de méthacrylamidopropyldiméthyl-2,3-dihydroxypropylammonium et du N,N-diméthylacrylamide.

9. Procédé ou utilisation selon l'une quelconque des revendications 1 à 8, selon lequel l'agent de réticulation est choisi parmi les sels et les complexes solubles dans l'eau dérivés de cations multivalents.